# EUROPEAN PATENT APPLICATION

(11) **EP 3 133 544 A1**
(43) Date of publication of application: **22.02.2017**
(21) Application number: 14891288.4
(22) Date of filing: 07.05.2014
(51) Int. Cl.: G06Q 20/00

(54) **PAYMENT METHOD AND DEVICE AND PAYMENT FACTOR PROCESSING METHOD AND DEVICE**

(71) Applicant: Huawei Technologies Co. Ltd., Shenzhen, Guangdong 518129 (CN)
(72) Inventor: ZHU, Haoying, Shenzhen Guangdong 518129 (CN)
(74) Representative: Körber, Martin Hans
(86) International application number: PCT/CN2014/076939
(87) International publication number: WO 2015/168878

(57) **Abstract**

This application provides a payment method and apparatus and a payment factor processing method and apparatus. The payment method includes: receiving a payment command; reading, from a first storage device, a first part of payment information corresponding to the payment command; reading at least one second part of the payment information from a second storage device, where the first part and the second part form the complete payment information; combining the first part and the second part into target payment information; acquiring a payment factor from the target payment information; and completing payment by using the payment factor. According to the method and the apparatus provided by the present invention, risk of payment factor leakage is low.

## Description

### TECHNICAL FIELD

The present invention relates to the field of communications technologies, and in particular, to a payment method and apparatus and a payment factor processing method and apparatus.

### BACKGROUND

With development of Internet technologies and the logistics industry, many people have gradually formed a consumption habit of online shopping. With the popularity of smartphones and the mobile Internet, shopping online by using a mobile phone is also a behavior that gradually becomes widespread. How to conveniently and securely perform online payment by using a mobile phone is getting increasing attention from users and the industry. For the convenience of users, currently, a mainstream technical solution in the industry is a payment account mode led by a payment service institution.

To implement online payment by using the payment account mode, a user first needs to open an account on a payment server provided by the payment service institution, and save payment factors such as a number of a bank card of the user, a validity period of the bank card, a verification code of the bank card, and the name of the user in the payment server. When the payment is completed, the user sends a payment instruction to the payment server by using a client on an apparatus such as a mobile phone. After verifying an identity of the user according to the payment instruction of the user, the payment server submits the payment factors saved by the user to a bank, and the bank completes transfer of money, to complete payment processing. In this manner, when performing online payment, the user does not need to enter the payment factors every time, and only needs to enter an account password, which lowers a risk of payment factor leakage and brings convenience to the user.

When saving the payment factors, the payment server encrypts data of the payment factors to lower the risk of payment factor leakage. However, because a large amount of sensitive information such as payment factors is saved in the payment server, the payment server easily becomes a target of attack by a hacker. Once the hacker finds a security vulnerability and breaks into the payment server, a large amount of sensitive information is leaked, causing losses to the user. In addition, when the payment server verifies the identity of the user, the user needs to enter an account password on a client on an apparatus such as a mobile phone. In this manner, an operation process of entering the account password is inconvenient, and the account password may be stolen easily during the process of entering or transmitting the password, which causes leakage of the payment factors. It can be seen from the foregoing content that when payment is performed by using the prior art, there is a relatively high risk of leakage during a process of saving and using the payment factors.

### SUMMARY

Embodiments of the present invention provide a payment method and apparatus and a payment factor processing method and apparatus, to resolve a problem that a risk of payment factor leakage is relatively high in the prior art.

To resolve the foregoing technical problem, the embodiments of the present invention disclose the following technical solutions:

According to a first aspect, an embodiment of the present invention discloses a payment method, including: receiving a payment command; reading, from a first storage device, a first part of payment information corresponding to the payment command; reading at least one second part of the payment information from a second storage device, where the first part and the second part form the complete payment information; combining the first part and the second part into target payment information; acquiring a payment factor from the target payment information; and completing payment by using the payment factor.

With reference to the first aspect, in a first possible implementation manner of the first aspect, the acquiring a payment factor from the target payment information includes: extracting a ciphertext from the target payment information; acquiring a key and an encryption algorithm that are used to generate the ciphertext; and decrypting the ciphertext by using the key and the encryption algorithm, to obtain the payment factor.

With reference to the first possible implementation manner of the first aspect, in a second possible implementation manner of the first aspect, the acquiring a key and an encryption algorithm that are used to generate the ciphertext includes: extracting the key and the encryption algorithm from the target payment information.

With reference to the first aspect, the first possible implementation manner of the first aspect, or the second possible implementation manner of the first aspect, in a third possible implementation manner of the first aspect, before the receiving a payment command, the method further includes: receiving the payment factor, where the payment factor is information required for completing online payment; generating the payment information including the payment factor; dividing the payment information into the first part and the at least one second part according to a preset division rule; saving the first part to the first storage device; and saving the second part to the second storage device.

According to a second aspect, an embodiment of the present invention discloses a payment factor processing method, including: receiving a payment factor, where the payment factor is information required for completing online payment; generating payment information including the payment factor; dividing the payment information into a first part and at least one second part according to a preset division rule; saving the first part to a first storage device; and saving the second part to a second storage device.

With reference to the second aspect, in a first possible implementation manner of the second aspect, the generating payment information including the payment factor includes: encrypting the payment factor to generate a ciphertext; and generating the payment information including the ciphertext.

With reference to the first possible implementation manner of the second aspect, in a second possible implementation manner of the second aspect, the generating the payment information including the ciphertext includes: generating the payment information including the ciphertext and a key and an encryption algorithm that are used to generate the ciphertext.

With reference to the second aspect, the first possible implementation manner of the second aspect, or the second possible implementation manner of the second aspect, in a third possible implementation manner of the second aspect, the saving the second part to a second storage device includes: when there are at least two second parts, saving the at least two second parts to the same second storage device.

With reference to the second aspect, the first possible implementation manner of the second aspect, the second possible implementation manner of the second aspect, or the third possible implementation manner of the second aspect, in a fourth possible implementation manner of the second aspect, the saving the second part to a second storage device includes: when there are at least two second parts, saving the at least two second parts to the same second storage device.

With reference to the second aspect, the first possible implementation manner of the second aspect, the second possible implementation manner of the second aspect, the third possible implementation manner of the second aspect, or the fourth possible implementation manner of the second aspect, in a fifth possible implementation manner of the second aspect, the first storage device is a wireless storage device.

With reference to the second aspect, the first possible implementation manner of the second aspect, the second possible implementation manner of the second aspect, the third possible implementation manner of the second aspect, the fourth possible implementation manner of the second aspect, or the fifth possible implementation manner of the second aspect, in a sixth possible implementation manner of the second aspect, the method further includes: receiving a payment command; reading, from the first storage device, the first part of the payment information corresponding to the payment command; reading the at least one second part of the payment information from the second storage device, where the first part and the second part that is read from the second storage device form the complete payment information; combining the first part and the read second part into target payment information; acquiring the payment factor from the target payment information; and completing payment by using the payment factor.

According to a third aspect, an embodiment of the present invention discloses a payment apparatus, including: a receiving unit, configured to receive a payment command; a reading unit, configured to read, from a first storage device, a first part of payment information corresponding to the payment command; and read at least one second part of the payment information from a second storage device, where the first part and the second part form the complete payment information; a combining unit, configured to combine the first part and the second part that are read by the reading unit into target payment information; an acquiring unit, configured to acquire a payment factor from the target payment information generated by the combining unit; and a payment unit, configured to complete payment by using the payment factor acquired by the acquiring unit.

With reference to the third aspect, in a first possible implementation manner of the third aspect, the acquiring unit includes: a ciphertext extraction subunit, configured to extract a ciphertext from the target payment information; a key acquiring subunit, configured to acquire a key and an encryption algorithm that are used to generate the ciphertext extracted by the ciphertext extraction subunit; and a decryption subunit, configured to decrypt, by using the key and the encryption algorithm that are acquired by the key acquiring subunit, the ciphertext extracted by the ciphertext extraction subunit, to obtain the payment factor.

With reference to the first possible implementation manner of the third aspect, in a second possible implementation manner of the third aspect, the key acquiring subunit is configured to extract the key and the encryption algorithm from the target payment information.

With reference to the third aspect, the first possible implementation manner of the third aspect, or the second possible implementation manner of the third aspect, in a third possible implementation manner of the third aspect, the receiving unit is further configured to receive the payment factor, where the payment factor is information required for completing online payment; and the apparatus further includes: a processing unit, configured to generate the payment information including the payment factor; and divide the payment information into more than two parts according to a preset division rule; and a saving unit, configured to save the first part of the payment information to the first storage device; and save the second part of the payment information to the second storage device.

According to a fourth aspect, an embodiment of the present invention discloses a payment apparatus, including: a processor, a memory, and a communications interface, where the processor, the memory, and the communications interface are connected to each other by using a bus; the communications interface is configured to receive a payment command, read a first part of payment information from a first storage device according to the payment command, and read a second part of the payment information from a second storage device; and the processor is configured to combine the first part and the second part into target payment information, acquire a payment factor from the target payment information, and complete payment by using the payment factor.

With reference to a first possible implementation manner of the fourth aspect, in a second possible implementation manner of the fourth aspect, the second storage device is the memory.

According to a fifth aspect, an embodiment of the present invention discloses a payment factor processing apparatus, including: a receiving unit, configured to receive a payment factor, where the payment factor is information required for completing online payment; a generation unit, configured to generate payment information including the payment factor received by the receiving unit; a division unit, configured to divide the payment information generated by the generation unit into a first part and at least one second part according to a preset division rule; and a saving unit, configured to save the first part, which is generated by the division unit, of the payment information to a first storage device; and save the second part of the payment information generated by the generation unit to a second storage device.

With reference to the fifth aspect, in a first possible implementation manner of the fifth aspect, the generation unit includes: an encryption subunit, configured to encrypt the payment factor to generate a ciphertext; and a generation subunit, configured to generate the payment information including the ciphertext generated by the encryption subunit.

With reference to the first possible implementation manner of the fifth aspect, in a second possible implementation manner of the fifth aspect, the generation subunit is further configured to generate the payment information including the ciphertext and a key and an encryption algorithm that are used to generate the ciphertext.

With reference to the fifth aspect, the first possible implementation manner of the fifth aspect, or the second possible implementation manner of the fifth aspect, in a third possible implementation manner of the fifth aspect, the saving unit is further configured to save the first part generated by the division unit to the first storage device; and save the at least one second part generated by the division unit to the same second storage device.

With reference to the fifth aspect, the first possible implementation manner of the fifth aspect, the second possible implementation manner of the fifth aspect, or the third possible implementation manner of the fifth aspect, in a fourth possible implementation manner of the fifth aspect, the receiving unit is further configured to receive a payment command; and the apparatus further includes: an acquiring unit, configured to: after the payment command is received, read the first part of the payment information and a serial number from the first storage device; and read the second part of the payment information from the second storage device; a processing unit, configured to combine the first part and the second part into target payment information; and acquire the payment factor from the target payment information; and a payment unit, configured to complete payment by using the payment factor.

According to a sixth aspect, an embodiment of the present invention discloses a payment factor processing apparatus, including: a processor, a memory, and a communications interface, where the processor, the memory, and the communications interface are connected to each other by using a bus; the communications interface is configured to receive a payment factor, where the payment factor is information required for completing online payment; the processor is configured to generate payment information including the payment factor, and divide the payment information into a first part and at least one second part according to a preset division rule; and the communications interface is further configured to save the second part to the memory, and save the first part of the payment information to a first storage device.

With reference to the sixth aspect, in a first possible implementation manner of the sixth aspect, the second storage device is the memory.

With reference to the sixth aspect or the first possible implementation manner of the sixth aspect, in a second possible implementation manner of the sixth aspect, the first storage device is a wireless storage device.

The payment method provided in this embodiment includes: receiving a payment command; reading, from a first storage device, a first part of payment information corresponding to the payment command; reading at least one second part of the payment information from a second storage device, where the first part and the second part form the complete payment information; combining the first part and the second part into target payment information; acquiring a payment factor from the target payment information; and completing payment by using the payment factor. According to the payment method provided in the embodiments of the present invention is used, a leakage risk is low during a process of using the payment factor because different parts of the payment factor are acquired from different devices. According to the payment factor processing method provided in the embodiments of the present invention, the payment factor is divided into multiple parts after encryption, and the multiple parts are saved to different storage devices. Therefore, even if information saved to one of the storage devices is leaked, payment factor leakage is not caused, which greatly lowers a risk of payment factor leakage during storage.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, a person of ordinary skill in the art may still derive other drawings from these accompanying drawings without creative efforts.
FIG. 1 is a schematic flowchart of an embodiment of a payment method according to the present invention;
FIG. 2 is a schematic flowchart of an embodiment of a payment factor processing method according to the present invention;
FIG. 3 is a schematic diagram of an embodiment of a payment apparatus according to the present invention;
FIG. 4 is a schematic diagram of another embodiment of a payment apparatus according to the present invention;
FIG. 5 is a schematic diagram of an embodiment of a payment factor processing apparatus according to the present invention; and
FIG. 6 is a schematic diagram of another embodiment of a payment factor processing apparatus according to the present invention.

### DESCRIPTION OF EMBODIMENTS

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

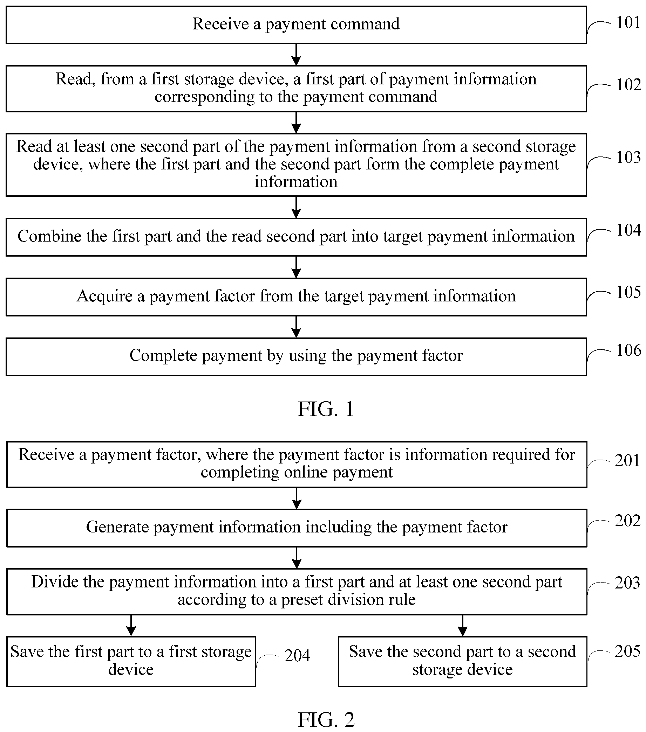

Referring to FIG. 1, which is a schematic flowchart of an embodiment of a payment method according to the present invention, the method includes the following steps:
Step 101: Receive a payment command.
   Payment information includes a required payment factor used to complete card-not-present payment. In actual use, there may be a lot of payment information that can be used. Therefore, the payment command may specify a piece of payment information used to complete this payment. For example, one or more serial numbers may be specified in the payment command, the payment can only be completed by using payment information corresponding to a specified serial number, and another piece of payment information cannot be used for this payment.
Step 102: Read, from a first storage device, a first part of payment information corresponding to the payment command.
   The payment information is divided into the first part and a second part, and the first part and the second part are separately saved to different memories. Therefore, the first part and the second part need to be separately read from different memories.
   If the payment command specifies that this payment needs to be completed by using particular payment information, a payment device needs to read a first part from a first storage device corresponding to the specified payment information. If the payment command does not limit payment information, any first part may be acquired from any first storage device.
   For example, after receiving a payment command, a mobile terminal displays information such as product information and a payment amount to a user on an interface of client software according to an indication of the payment command, and prompts the user to touch the terminal once with an NFC tag in which a first part is saved; or may prompt the user to touch the terminal once with an NFC tag in which a first part having a specified serial number is saved. After the user takes out the NFC tag, and touches a corresponding position of the terminal as required, an NFC communications interface can read information previously saved in the NFC tag. If the read is successful, the terminal may play a corresponding success prompt tone for the user. The terminal extracts the first part according to the information read from the NFC tag.
Step 103: Read at least one second part of the payment information from a second storage device, where the first part and the second part form the complete payment information.
   The second part and the first part may form complete target payment information. There may be one or more second parts, and a specific quantity of second parts is determined by a processing process of the payment factor.
   When there are multiple second parts, if all the second parts are saved to one second storage device, all the second parts may be directly acquired from the second storage device; if the multiple second parts are separately saved to multiple second storage devices, each second part needs to be acquired from each second storage device, so as to acquire all the second parts. When the second parts are acquired, a quantity of the second parts and a location to which each second part is saved may be determined according to the payment command, or a quantity of the second parts and a location to which each second part is saved may be determined according to the acquired first part. Then, each second part is read from the storage location.
   For example, during actual use, the quantity of the second parts and the location to which each second part is saved may be determined according to content included in the first part, and then, each second part is acquired from the storage location; or each second part corresponding to a serial number may be read from a specified memory according to the serial number specified in the payment command.
Step 104: Combine the first part and the second part into target payment information.
   After the first part and the second part are separately acquired, the first part of the payment information and the second part of the payment information may be combined into the target payment information. For example, the first part and the second part may be combined into the target payment information by using a combination method corresponding to a division method used to generate the first part and the second part.
Step 105: Acquire a payment factor from the target payment information.
   For the sake of data storage and data transmission, in addition to the necessary payment factor, the target payment information further includes some necessary information such as data verification information and the serial number, and the payment factor may be in a ciphertext form.
   When the payment factor included in the payment information is in a cleartext form, the terminal can acquire the payment factor from the payment information. When the payment factor included in the payment information is in a ciphertext form, a ciphertext needs to be extracted from the target payment information; and a key and an encryption algorithm that are used to generated the ciphertext are acquired, and then, the ciphertext is decrypted by using the key and the encryption algorithm, to obtain the payment factor. If the payment information already includes the key and the encryption algorithm that are used to generate the ciphertext, the key and the encryption algorithm may be directly extracted from the target payment information.
Step 106: Complete payment by using the payment factor.
   After the payment factor is obtained through decryption, the payment factor may be provided for a bank system, to complete payment of an order. For example, the terminal may perform corresponding processing and conversion on order information and payment factor data, to conform to a data format and an interface protocol that are required by a bank, and submit the order information and the payment factor data to the bank to complete transfer of money, so as to complete payment processing of the order.

In this embodiment, a payment command is received; a first part of payment information corresponding to the payment command is read from a first storage device; at least one second part of the payment information is read from a second storage device, where the first part and the second part form the complete payment information; the first part and the second part are combined into target payment information; a payment factor is acquired from the target payment information; and payment is completed by using the payment factor. When payment is completed by using this embodiment of the present invention, different parts of the payment factor are acquired from different devices. Therefore, even if a part of the payment factor is leaked during a using process, payment factor leakage is not caused, which lowers a risk of payment factor leakage during a payment process.

Before the payment is performed by using the process described in the foregoing embodiment, the payment factor may be processed first. The payment factor is received, where the payment factor is information required for completing online payment; the payment information including the payment factor is generated; the payment information is divided into the first part and the second part according to a preset division rule; the first part is saved to the first storage device; and the second part is saved to the second storage device. Refer to the following embodiment for a specific process.

Referring to FIG. 2, which is a schematic flowchart of an embodiment of a payment factor processing method according to the present invention, the method includes the following steps:
Step 201: Receive a payment factor, where the payment factor is information required for completing online payment.
   When acquiring the payment factor, a first apparatus may directly receive the payment factor entered by a user, or may acquire the payment factor from a second apparatus. The first apparatus may be a mobile terminal such as a mobile phone, or may be a payment server provided by a payment service institution. The second apparatus may be a mobile terminal or a server. The payment factor is information required for completing online payment.
   When directly receiving the payment factor entered by the user, the first apparatus may first send prompt information to prompt the user to enter the payment factor, and then receive the payment factor that is entered by the user according to the prompt information. The payment factor includes information required for completing the payment, such as a number of a bank card of the user, a validity period, a verification code of the card, and the name of the user. For example, after the user opens client software of a payment system on the terminal, the client software displays an operation instruction and an operation interface to the user, the user enters the payment factor on the interface of the client software according to the operation instruction, and the terminal acquires the payment factor entered by the user. If the user does not enter the payment factor according to a preset format or preset content, the terminal may remind the user to re-enter the payment factor.
   When the first apparatus acquires the payment factor from the second apparatus, the second apparatus may receive the payment factor, and then, the second apparatus sends the received payment factor to the first apparatus. A process in which the second apparatus acquires the payment factor is not described herein again.
Step 202: Generate payment information including the payment factor.
   The payment information may only include the payment factor. However, during actual use, to ensure completeness of the payment information, in addition to the payment factor, the payment information may further include verification information of the payment factor. For the convenience of use, the payment information may further include a serial number allocated to the payment factor, or may further include additional information such as a storage location pre-allocated to each second part.
   Because the payment factor includes sensitive information such as a bank card number and a password, leakage of any part of information included in the payment factor may cause losses to the user. To further strengthen security of the payment factor, when generating the payment information, the first apparatus may first encrypt the payment factor to generate a ciphertext, and then generate the payment information including the ciphertext.
   When encrypting the payment factor, the first apparatus may encrypt the payment factor by using a preset encryption algorithm and key; or may select one encryption algorithm from several candidate encryption algorithms and randomly generate a key, and then encrypt the payment factor by using the encryption algorithm and the key; or may encrypt the payment factor by using an encryption algorithm and a key that are selected by the user.
   To further strengthen the security of the payment factor, the payment information may further include the encryption algorithm and the key that are used to generate the ciphertext, to avoid a security risk caused by centralized storage of the encryption algorithm and the key.
Step 203: Divide the payment information into a first part and at least one second part according to a preset division rule.
   When the payment information is divided, the payment information may be divided into multiple first parts and multiple second parts. For the convenience of use, there may be usually one first part; and for the sake of storage of the payment factor, there may be usually more than one second part.
   When the payment information is divided into the second part of the payment information and the first part of the payment information, the division needs to be performed according to the preset rule, so that the first part and each second part all include a part of the payment factor. A proportion of the payment factor included in the first part of the payment information and a proportion of the payment factor included in the second part of the payment information may be set according to needs, but it is required that any part of content of the payment factor cannot be resaved based on any other part of the payment factor. That is, the payment factor cannot be parsed out based solely on the first part of the payment information or the second part of the payment information.
   For example, if the payment information includes the ciphertext, the encryption algorithm, and the key, the payment information may be divided into one first part and one second part according to the following rule: the first part includes the key and the first half of the ciphertext; and the second part of the payment information includes the encryption algorithm and the second half of the ciphertext. In this manner, the payment factor cannot be parsed out based solely on the first part of the payment information or based solely on the second part of the payment information. There are still a lot of specific division rules, which are not described herein again.
Step 204: Save the first part to a first storage device.
   After the first part and the second part are generated, the first part is saved to the first storage device. For the convenience of use by the mobile terminal, the first storage device may be a wireless storage device, for example, an NFC (Near Field Communication) tag or an RFID (Radio Frequency Identification) tag. For the convenience of using the first part during a payment process, when the first part is saved, a correspondence between the first part and the serial number allocated to the payment factor may also be saved, or other information used to determine a location to which the second part is saved may also be included.
   For example, when the first apparatus includes an NFC communications interface, the first apparatus may first start the NFC communications interface, and then prompt the user to touch a corresponding position of the terminal once with an NFC tag prepared in advance. During this process, the first apparatus writes the first part of the payment information and the serial number allocated to the payment factor into storage space of the NFC tag by using the NFC communications interface, and makes the NFC tag save the correspondence between the first part and the serial number. If the writing succeeds, the first apparatus may remind the user that the saving succeeds. If the writing fails, the first apparatus may remind the user that the saving fails, and guides the user to perform the operation again.
Step 205: Save the second part to a second storage device.
   After the first part and the second part are generated, the second part is saved to the second storage device, where the second storage device may be a pre-determined device. For the convenience of finding and using the second part during the payment process, a correspondence between the second part and the serial number allocated to the payment factor may also be saved, or the second part may be saved to a preset location of the second storage device. When there are at least two second parts, the at least two second parts may be saved to the same second storage device, or each of the second parts may be saved to one second storage device.

For example, the first apparatus may save the second part and the serial number allocated to the payment factor to a storage server provided by a payment institution, and make the storage server save the correspondence between the second part and the serial number.

As can be seen from the foregoing embodiment, a payment factor is received, where the payment factor is information required for completing online payment; payment information including the payment factor is generated; the payment information is divided into a first part and at least one second part according to a preset division rule; the first part is saved to a first storage device; and the second part is saved to a second storage device. As can be seen from the foregoing content, when a payment factor is saved by using the payment factor saving method provided in this embodiment, the payment factor is divided into two parts after encryption, and the two parts are separately saved to different apparatuses. Therefore, even if information saved to one of the apparatuses is leaked, payment factor leakage is not caused, and centralized storage of sensitive information such as the payment factor of a user on a payment server can be avoided, thereby avoiding a single-point security target, lowering a risk of massive sensitive data leakage caused by attack of a hacker, and greatly lowering a risk of payment factor leakage.

The foregoing payment factor processing steps may be an independent processing process, after the foregoing processing steps, the method may further include: receiving a payment command; reading the first part from the first storage device according to the payment command; reading all second parts of the payment information from a preset quantity of second storage devices; combining the first part and the second parts into target payment information; acquiring the payment factor from the target payment information; and completing payment by using the payment factor.

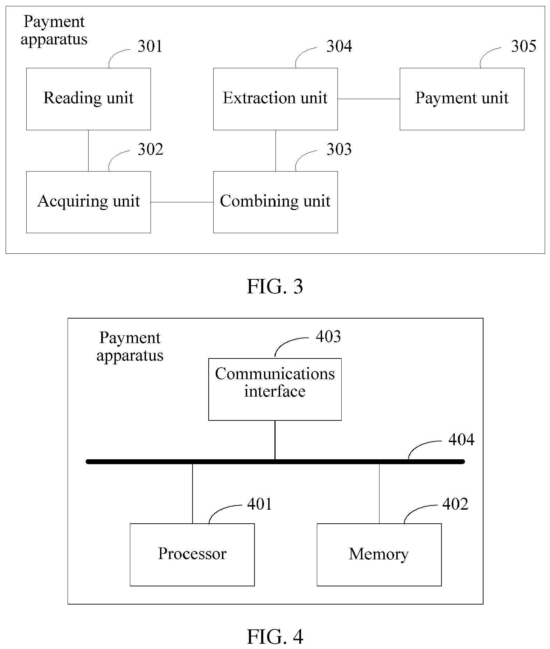

Refer to FIG. 3, which is a schematic diagram of an embodiment of a payment apparatus according to the present invention.

As shown in FIG. 3, the apparatus includes: a receiving unit 301, a reading unit 302, a combining unit 303, an acquiring unit 304, and a payment unit 305.

The receiving unit 301 is configured to receive a payment command.

The reading unit 302 is configured to read a first part of payment information from a first storage device according to the payment command received by the receiving unit 301; and read at least one second part of the payment information from a second storage device, where the first part and the second part form the complete payment information.

The combining unit 303 is configured to combine the first part and the second part that are read by the reading unit 302 into target payment information.

The acquiring unit 304 is configured to acquire a payment factor from the target payment information generated by the combining unit 303. The acquiring unit 304 may include: a ciphertext extraction subunit, configured to extract a ciphertext from the target payment information; a key acquiring subunit, configured to acquire a key and an encryption algorithm that are used to generate the ciphertext; and a decryption subunit, configured to decrypt, by using the key and the encryption algorithm that are acquired by the key acquiring subunit, the ciphertext extracted by the ciphertext extraction subunit, to obtain the payment factor.

The payment unit 305 is configured to complete payment by using the payment factor acquired by the acquiring unit 304.

In another embodiment, the receiving unit 301 is further configured to receive the payment factor, where the payment factor is information required for completing online payment; and the apparatus further includes: a processing unit, configured to generate the payment information including the payment factor; and divide the payment information into more than two parts according to a preset division rule; and a saving unit, configured to save the first part of the payment information to the first storage device; and save the second part of the payment information to the second storage device.

To complete payment by using this embodiment of the present invention, a user does not need to enter an account password or a payment factor on a terminal; therefore, not only an operation is easy and convenient, but also a risk of payment factor leakage during a payment process is lowered.

Refer to FIG. 4, which is a schematic diagram of another embodiment of a payment apparatus according to the present invention.

As shown in FIG. 4, the apparatus includes modules such as a processor 401, a memory 402, and a communications interface 403, and the modules are connected to each other by using a bus 404.

A computer instruction or a computer program required for implementing the foregoing embodiment of the payment method may be saved in the memory 402.

The communications interface 403 is configured to receive a payment command, read a first part of payment information from a first storage device according to the payment command, and read a second part of the payment information from a second storage device, where the second storage device may be the memory.

The processor 401 is configured to combine the first part and the second part into target payment information according to the computer instruction saved in the memory 402, acquire a payment factor from the target payment information, and complete payment by using the payment factor.

To complete payment by using this embodiment of the present invention, a user does not need to enter an account password or a payment factor on a terminal; therefore, not only an operation is easy and convenient, but also a risk of payment factor leakage during a payment process is lowered.

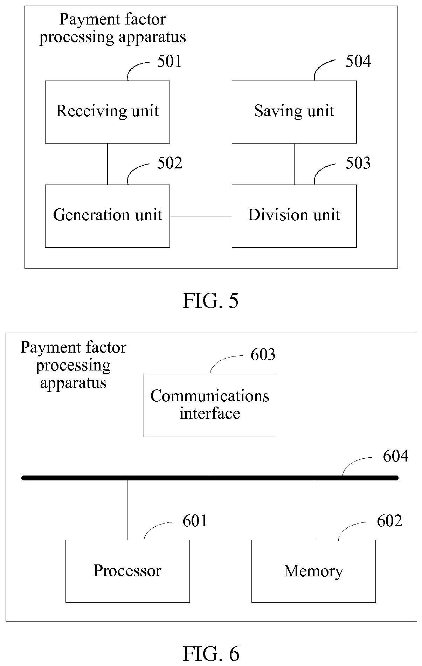

Refer to FIG. 5, which is a schematic diagram of an embodiment of a payment factor processing apparatus according to the present invention.

As shown in FIG. 5, the apparatus includes: a receiving unit 501, a generation unit 502, a division unit 503, and a saving unit 504.

The receiving unit 501 is configured to receive a payment factor, where the payment factor is information required for completing online payment.

The generation unit 502 is configured to generate payment information including the payment factor received by the receiving unit 501. The generation unit 502 may include: an encryption subunit, configured to encrypt the payment factor to generate a ciphertext; and a generation subunit, configured to generate the payment information including the ciphertext generated by the encryption subunit. To further ensure the security of a payment factor during storage, the generation subunit is further configured to generate the payment information including the ciphertext and a key and an encryption algorithm that are used to generate the ciphertext.

The division unit 503 is configured to divide the payment information generated by the generation unit 502 into a first part and at least one second part according to a preset division rule.

The saving unit 504 is configured to save the first part generated by the division unit 503 to a first storage device; and save the second part to a second storage device.

When there are at least two second parts, the saving unit 504 is further configured to save the first part generated by the division unit to the first storage device; and save the at least one second part generated by the division unit to the same second storage device.

In another embodiment, the receiving unit 501 is further configured to receive a payment command; and the apparatus further includes: an acquiring unit, configured to: after the payment command is received, read the first part of the payment factor and a serial number from the first storage device, and read the second part of the payment information from the second storage device; a processing unit, configured to combine the first part and the second part into target payment information, and read the payment factor from the target payment information; and a payment unit, configured to complete payment by using the payment factor.

When a payment factor is saved by using the payment factor saving method provided in this embodiment, the payment factor is divided into two parts after encryption, and the two parts are separately saved to different apparatuses. Therefore, even if information saved to one of the apparatuses is leaked, payment factor leakage is not caused, which greatly lowers a risk of payment factor leakage.

Refer to FIG. 6, which is a schematic diagram of another embodiment of a payment factor processing apparatus according to the present invention.

As shown in FIG. 6, the apparatus includes modules such as a processor 601, a memory 602, and a communications interface 603, and the modules are connected to each other by using a bus 604.

A computer instruction or a computer program required for implementing the foregoing embodiment of the payment factor processing method may be saved in the memory 602.

The communications interface 603 is configured to receive a payment factor, where the payment factor is information required for completing online payment. If the payment factor processing apparatus is a mobile device, the communications interface may be a wireless communications interface.

The processor 601 is configured to generate, according to the computer instruction saved in the memory 602, payment information including the payment factor, and divide the payment information into a first part and at least one second part according to a preset division rule.

The communications interface 603 is further configured to save the second part to the memory, and save the first part of the payment information to a first storage device, where the first storage device may be a wireless storage device, and the second storage device may be the memory.

When a payment factor is processed by using this embodiment of the present invention, the payment factor may be divided and saved to different storage devices. Therefore, even if information saved to one of the storage devices is leaked, payment factor leakage is not caused, which lowers a risk of payment factor leakage during storage.

A person skilled in the art may clearly understand that, the technologies in the embodiments of the present invention may be implemented by software in addition to a necessary general hardware platform. Based on such an understanding, the technical solutions in the embodiments of the present invention essentially or the part contributing to the prior art may be implemented in a form of a software product. The software product is saved in a storage medium, such as an ROM/RAM, a hard disk, or an optical disc, and includes several instructions for instructing a computer device (which may be a personal computer, a payment server, or a network apparatus) to perform the methods described in the embodiments or some parts of the embodiments of the present invention.

The embodiments in this specification are all described in a progressive manner, for same or similar parts in the embodiments, reference may be made to these embodiments, and each embodiment focuses on a difference from other embodiments. Especially, a system embodiment is basically similar to a method embodiment, and therefore is described briefly; for related parts, reference may be made to partial descriptions in the method embodiment.

The foregoing descriptions are implementation manners of the present invention, but are not intended to limit the protection scope of the present invention. Any modification, equivalent replacement, and improvement made without departing from the spirit and principle of the present invention shall fall within the protection scope of the present invention.

## Claims

1. A payment method, comprising:
receiving a payment command;
reading, from a first storage device, a first part of payment information corresponding to the payment command;
reading at least one second part of the payment information from a second storage device, wherein the first part and the second part form the complete payment information;
combining the first part and the second part into target payment information;
acquiring a payment factor from the target payment information; and
completing payment by using the payment factor.

2. The method according to claim 1, wherein the acquiring a payment factor from the target payment information comprises:
extracting a ciphertext from the target payment information;
acquiring a key and an encryption algorithm that are used to generate the ciphertext; and
decrypting the ciphertext by using the key and the encryption algorithm, to obtain the payment factor.

3. The method according to claim 2, wherein the acquiring a key and an encryption algorithm that are used to generate the ciphertext comprises:
extracting the key and the encryption algorithm from the target payment information.

4. The method according to any one of claims 1 to 3, wherein before the receiving a payment command, the method further comprises:
receiving the payment factor, wherein the payment factor is information required for completing online payment;
generating the payment information comprising the payment factor;
dividing the payment information into the first part and the at least one second part according to a preset division rule;
saving the first part to the first storage device; and
saving the second part to the second storage device.

5. A payment factor processing method, comprising:
receiving a payment factor, wherein the payment factor is information required for completing online payment;
generating payment information comprising the payment factor;
dividing the payment information into a first part and at least one second part according to a preset division rule;
saving the first part to a first storage device; and
saving the second part to a second storage device.

6. The method according to claim 5, wherein the generating payment information comprising the payment factor comprises:
encrypting the payment factor to generate a ciphertext; and
generating the payment information comprising the ciphertext.

7. The method according to claim 6, wherein the generating the payment information comprising the ciphertext comprises:
generating the payment information comprising the ciphertext and a key and an encryption algorithm that are used to generate the ciphertext.

8. The method according to any one of claims 5 to 7, wherein the saving the second part to a second storage device comprises:
when there are at least two second parts, saving the at least two second parts to the same second storage device.

9. The method according to any one of claims 5 to 8, wherein the first storage device is a wireless storage device.

10. The method according to any one of claims 5 to 9, wherein the method further comprises:
receiving a payment command;
reading, from the first storage device, the first part of the payment information corresponding to the payment command;
reading the at least one second part of the payment information from the second storage device, wherein the first part and the second part that is read from the second storage device form the complete payment information;
combining the first part and the read second part into target payment information;
acquiring the payment factor from the target payment information; and
completing payment by using the payment factor.

11. A payment apparatus, comprising:
a receiving unit, configured to receive a payment command;
a reading unit, configured to read, from a first storage device, a first part of payment information corresponding to the payment command; and read at least one second part of the payment information from a second storage device, wherein the first part and the second part form the complete payment information;
a combining unit, configured to combine the first part and the second part that are read by the reading unit into target payment information;
an acquiring unit, configured to acquire a payment factor from the target payment information generated by the combining unit; and
a payment unit, configured to complete payment by using the payment factor acquired by the acquiring unit.

12. The apparatus according to claim 11, wherein the acquiring unit comprises:
a ciphertext extraction subunit, configured to extract a ciphertext from the target payment information;
a key acquiring subunit, configured to acquire a key and an encryption algorithm that are used to generate the ciphertext extracted by the ciphertext extraction subunit; and
a decryption subunit, configured to decrypt, by using the key and the encryption algorithm that are acquired by the key acquiring subunit, the ciphertext extracted by the ciphertext extraction subunit, to obtain the payment factor.

13. The apparatus according to claim 12, wherein
the key acquiring subunit is configured to extract the key and the encryption algorithm from the target payment information.

14. The apparatus according to any one of claims 11 to 13, wherein
the receiving unit is further configured to receive the payment factor, wherein the payment factor is information required for completing online payment; and
the apparatus further comprises:
a processing unit, configured to generate the payment information comprising the payment factor; and divide the payment information into more than two parts according to a preset division rule; and
a saving unit, configured to save the first part of the payment information to the first storage device; and save the second part of the payment information to the second storage device.

15. A payment factor processing apparatus, comprising:
a receiving unit, configured to receive a payment factor, wherein the payment factor is information required for completing online payment;
a generation unit, configured to generate payment information comprising the payment factor received by the receiving unit;
a division unit, configured to divide the payment information generated by the generation unit into a first part and at least one second part according to a preset division rule; and
a saving unit, configured to save the first part, which is generated by the division unit, of the payment information to a first storage device; and save the second part of the payment information generated by the generation unit to a second storage device.

16. The apparatus according to claim 15, wherein the generation unit comprises:
an encryption subunit, configured to encrypt the payment factor to generate a ciphertext; and
a generation subunit, configured to generate the payment information comprising the ciphertext generated by the encryption subunit.

17. The method according to claim 16, wherein
the generation subunit is further configured to generate the payment information comprising the ciphertext and a key and an encryption algorithm that are used to generate the ciphertext.

18. The method according to any one of claims 15 to 17, wherein
the saving unit is further configured to save the first part generated by the division unit to the first storage device; and save the at least one second part generated by the division unit to the same second storage device.

19. The method according to any one of claims 15 to 18, wherein
the receiving unit is further configured to receive a payment command; and
the apparatus further comprises:
an acquiring unit, configured to: after the payment command is received, read the first part of the payment information and a serial number from the first storage device; and read the second part of the payment information from the second storage device;
a processing unit, configured to combine the first part and the second part into target payment information; and acquire the payment factor from the target payment information; and
a payment unit, configured to complete payment by using the payment factor.

20. A payment apparatus, comprising: a processor, a memory, and a communications interface, wherein the processor, the memory, and the communications interface are connected to each other by using a bus;
the communications interface is configured to receive a payment command, read a first part of payment information from a first storage device according to the payment command, and read a second part of the payment information from a second storage device; and
the processor is configured to combine the first part and the second part into target payment information according to a computer instruction saved in the memory, acquire a payment factor from the target payment information, and complete payment by using the payment factor.

21. The payment apparatus according to claim 20, wherein the second storage device is the memory.

22. A payment factor processing apparatus, comprising: a processor, a memory, and a communications interface, wherein the processor, the memory, and the communications interface are connected to each other by using a bus;
the communications interface is configured to receive a payment factor, wherein the payment factor is information required for completing online payment;
the processor is configured to generate, according to a computer instruction saved in the memory, payment information comprising the payment factor, and divide the payment information into a first part and at least one second part according to a preset division rule; and
the communications interface is further configured to save the second part to the memory, and save the first part of the payment information to a first storage device.

23. The payment apparatus according to claim 22, wherein
the second storage device is the memory.

24. The payment apparatus according to claim 22 or 23, wherein the first storage device is a wireless storage device.
